# EUROPEAN PATENT SPECIFICATION

(11) **EP 3 435 560 B1**
(45) Date of publication and mention of the grant of the patent: **23.10.2019**
(21) Application number: 17182756.1
(22) Date of filing: 24.07.2017
(51) Int. Cl.: H04B 10/116

(54) **VISIBLE LIGHT COMMUNICATION, VLC, NETWORK AND METHOD**
SICHTBARE LICHTKOMMUNIKATION (VLC), NETZWERK UND VERFAHREN
COMMUNICATION DE LUMIÈRE VISIBLE, VLC, RÉSEAU ET PROCÉDÉ

(43) Date of publication of application: 30.01.2019
(73) Proprietor: Deutsche Telekom AG, 53113 Bonn (DE)
(72) Inventor: BUNGE, Christian-Alexander, Prof., 14532 Kleinmachnow (DE); NOLAN, Julian Charles, 1009 Pully (CH); LAWRENSON, Matthew John, 1030 Bussigny (CH)
(74) Representative: Vossius & Partner Patentanwälte Rechtsanwälte mbB

(56) References cited:
- US-A1- 2014 050 487
- HAI-HAN LU ET AL: "A multiple-input-multiple-output visible light communication system based on VCSELs and spatial light modulators", OPTICS EXPRESS, vol. 22, no. 3, 6 February 2014 (2014-02-06), page 3468, XP055441514, DOI: 10.1364/OE.22.003468
- HE CUIWEI ET AL: "Performance comparison between spatial multiplexing and spatial modulation in indoor MIMO visible light communication systems", 2016 IEEE INTERNATIONAL CONFERENCE ON COMMUNICATIONS (ICC), IEEE, 22 May 2016 (2016-05-22), pages 1-6, XP032922534, DOI: 10.1109/ICC.2016.7511379 [retrieved on 2016-07-12]
- KIM SUNG-MAN ET AL: "Wireless visible light communication technology using optical beamforming", OPTICAL ENGINEERING, SOC. OF PHOTO-OPTICAL INSTRUMENTATION ENGINEERS, BELLINGHAM, vol. 52, no. 10, 1 October 2013 (2013-10-01), page 106101, XP060025608, ISSN: 0091-3286, DOI: 10.1117/1.OE.52.10.106101 [retrieved on 2013-10-03]

## Description

### Field of the invention

The invention relates to a Visible Light Communication, VLC, network and to a method for use in a VLC network with at least two transmission receiver systems.

### Background

Visible light communication, VLC, is the transfer of data which uses visible light between 375 and 800 nm. In its most basic form a transmitter modulates a light source to transmit the signal, and the change in light incident on a photodetector is then the received signal.

Spatial Light Modulators, SLM, is a system that is able to impose a spatially variant modulation onto light. A simple SLM might include a number of light sources each of which can be turned on or off individually. Then, by modulating these light sources either an image can be projected, or data transmitted.

Other forms of SLM involve the splitting of light beams, with some parts of the beam being projected and others not. An example of this is an overhead projector where an array of mirrors determines which part of light emitted from a bulb is projected and which is not, thus forming an image. One example of a prior art communication system using SLMs can be found in the article "A multiple-input-output visible light communication system based on VCSELs and spatial light modulators", Lu H-H et al, 2014.

### Problem to be solved

The issue being solved by this invention is how to optimize the transmission of light from a Virtual SLM - i.e. an SLM created from a set of light sources, for example lights in multiple buildings when the light passes through outdoor space, and is therefore subject to varying environmental conditions.

If a SLM has the option of many channels these channels may be modulated individually and thus have a high potential data rate, or they may be aggregated to improve signal strength but reduce data rate, as less channels are now available.

Depending on the environmental conditions the Virtual SLM may comprise many channels, and thus have a high data rate, or may comprise a lower number of channels but where the combined channels are able to project more light onto the receiving sensors. Such an optimization will likely need to be done dynamically due to the variability of environmental conditions.

It is an object of the invention to provide a Visible Light Communication, VLC, network which comprises at least two transmission receiver systems and a method therefor, taking into account the above aforementioned problems.

### Summary of the invention

The object is achieved with the features of the independent claims.

A visible light communication, VLC, network comprises at least two transmission receiver systems (TRS1, TRS2), TRS. Each TRS is formed by a transmission unit, a receiver unit and a transmission receiver controller, TR controller.

The transmission unit is configured to transmit data in a form of visible light. The transmission unit comprises a plurality of spatial light modulator units, SLMUs, wherein the plurality of SLMUs are configured to form groups in order to create a virtual spatial light modulator, VSLM, and a transmission controller, T controller.

The receiver unit is configured to receive data in the form of visible light. The receiver unit comprises a pixelated sensor, a receiver controller, R controller, and an optical system formed in front of the pixelated sensor.

The TR controller is configured to communicate with both the T controller and the R controller, determine a configuration of the TRS by use of at least one configuration optimization algorithm, store a set of these algorithms in a configuration optimization algorithm database, and store the configurations in a configuration memory. These configurations can be the configuration set to deliver the maximum signal-to-noise ratio possible with current resources, called primary configuration, the current configuration being used by the TRS, and the last configuration to be successfully used to transmit data.

A group of SLMUs may further be aggregated to form an aggregated spatial light modulator unit, ASLMU, wherein the T controller is configured to apply a configuration to the SLMUs in order to form the VSLM and to store a default messaging used in communication.

The pixelated sensor may be configured to spatially resolve the incident light, wherein the R controller is configured to apply a configuration to the pixelated sensor.

The optical system may be configured to be controlled by the R controller, adaptive optical system.

The adaptive optical system may further be configured to choose between light paths by at least one or more spatial light modulators, mirrors, or rotational stages by which also tilts are feasible.

Each of the TRS may further comprise at least one reflective object, RO, configured to reflect the signal so that the transmitted data can be received by the receiving TRS. The at least one RO can be either part of the original environment or intentionally placed in order to improve the transmission.

The TR controller may be further configured to store and to execute an algorithm capable to determine the availability and usefulness of reflective objects, ROs.

Each of the TRS may further comprise a set of transmission curves data and a transmission lookup table, LUT. These transmission curves describe influencing environmental effects such as attenuation, dispersion, scattering or refraction of light with known properties as it passes through various environmental conditions. These effects are described by an environmental transfer function. The transmission lookup table, LUT, may be configured to associate various environmental conditions with VSLM and pixelated sensor configurations.

A method for a visible light communication, VLC, network comprising at least two transmission receiver systems (TRS1, TRS2), TRS, wherein each TRS is formed by a transmission unit, a receiver unit, and a transmission receiver controller, TR controller. The transmission unit comprises a plurality of spatial light modulator units, SLMUs, wherein the plurality of SLMUs are configured to form groups in order to create a virtual spatial light modulator, VSLM, and a transmission controller, T controller. The receiver unit comprises a pixelated sensor, a receiver controller, R controller, and an optical system. The transmission receiver controller, TR controller, that communicates with both the T controller and the R controller, determines a configuration of the TRS by use of at least one configuration optimization algorithm, stores a set of these algorithms in a configuration optimization algorithm database, and stores the configurations in a configuration store, wherein these configurations can be the configuration set to deliver the maximum signal-to-noise ratio possible with current resources, further referred to as primary configuration, the current configuration being used by the TRS, and the last known good, LKG, configuration to be successfully used to transmit data.

The method comprising the steps of: a) establishing data requirements for transmitting data from TRS1 to TRS2; b) transmitting first test data from the transmission unit TRS1 to the receiver unit of TRS2, both configured primary; c) waiting up at the TR controller to a prescribed time duration to see if a reply is received from TRS2, wherein in the case that no answer is received after the prescribed time duration, the TRS1 is not able to send a message and the method proceeds with step h), wherein in the case that the receiver unit of TRS2 receives the first test data, the TR controller of TRS2 transmits second test data via the transmission unit of TRS2; d) receiving the second test data at TRS1; e) setting the primary configuration to be the LKG configuration, f) using the configuration optimization algorithm to select and set the current configuration based on an optimization strategy, g) repeating steps b) to e) until the second test data is not received within the prescribed time duration, and h) when this occurs setting the TRS1 with the LKG configuration, and transmitting a message from TRS1.

In the case where: each TRS additionally comprise a set of transmission curves, environmental transfer functions, which describe influencing environmental effects such as attenuation, dispersion, scattering or refraction of light with known properties as it passes through various environmental conditions and a transmission lookup table, LUT, configured to associate various environmental conditions with the VSLM and pixelated sensor configurations, wherein selecting a new configuration using the configuration optimization algorithm is based on an analysis of the environmental effect on the transmission; the method may further comprise the steps, for carrying out the analysis, of f) transmitting first test data with a known set of properties multiple times with various properties, such as different frequencies, from the transmission unit of TRS1 to the receiver unit of TRS2; g) receiving the first test data at TRS2, comparing the properties of the received light with the light sent by TRS 1, and determining the transmission characteristics of the signal; h) comparing the transmission characteristics with the transmission curves and finding the best transmission curve that best describes the current transmission characteristics; i) using said transmission curve as an input to query the transmission LUT and finding the most appropriate configuration for the transmission; j) setting said configuration as the current configuration.

The method may further comprise the step of determining whether the transmission characteristics can be improved by incorporating at least one reflective object, RO, into the VSLM.

The step of determining whether the transmission characteristics can be improved by incorporating at least one reflective object, RO, into the VSLM may comprise the steps of: k) setting TRS 1 and TRS2 with the primary configuration, wherein the primary configuration can include SLMUs that do not have a line of sight transmission to TRS2; 1) transmitting from TRS1 to TRS2 a sequence of modulated test signals using this configuration and receiving said sequence by TRS2; m) removing from the VSLM the SLMUs with no line of sight transmission to the receiver unit and comparing the sequence of modulated signals to the sequence of modulated signals when all SLMUs were included in the VSLM, and if the signal is degraded, determining that the transmission has been lost due to a RO, if the signal is improved, adding the SLMU to the VSLM.

The invention targets scenarios where data is sent from a transmitter to a receiver using VLC.

A typical scenario is considered to be data transmission across open space, i.e. space where various environmental variations (such as weather, pollution, etc) can modify the transmission of the signal. For example, a signal being transmitted during rain may experience attenuation and therefore not be received.

In order to provide the flexibility to cope with such changes in the transmission path, a Virtual Spatial Light Modulator, VSLM, is used as the transmitter. A SLM is generally thought to be a purpose-built array of lighting sources that can be individually addressed, or addressed in groups. A VSLM is defined as being an SLM comprising distributed light sources, for example various lights within a building, where again the light sources can be individually addressed or addressed in groups. The spacing between the light sources may or may not be uniform, and also the intensity across light sources may not be uniform.

In a scenario where multiple light sources make up the VSLM a choice exists as to what configuration of light sources to use. If a high number of individually modulated light sources is used, i.e. many light sources each acting as a separate channel, then a high data rate may be possible because of possible parallel transmission. If the light sources are grouped into a small number of sets, where they are addressed as a set, then fewer channels are available, so the data rate is reduced. The channels can also use different combinations of the same light sources in order to achieve more robust transmission while maintaining the same number of parallel channels as in the case of individual parallel transmission. However, the number of photons being received by a transmitter is increased, or, in other words, the signal may be increased.

Therefore, the scenario where light sources are grouped into a small number of sets, where they are addressed as a set, the signal is increased through the number of photons being received by a transmitter and it may be possible to transmit data in scenarios where environmental considerations mean data could not otherwise be transmitted.

The transmitters are light sources within buildings, so can be multiple light sources within a single building, or multiple light sources across several buildings. The goal of the invention is to determine an optimal configuration of a VSLM such that a signal can be transmitted and received with optimal data rate.

An example of a process used to do this is as follows, considering A to be the sender and B to be the receiver:
First the system starts with a configuration of the VSLM and corresponding receiver configuration, chosen such that it has the maximum photon transmission. Secondly, a test signal is sent by A to B, and is received by B, who sends a message back to A to confirm this. Afterwards, A and B reconfigure to a new VSLM, and optionally a new receiver configuration, and a new test signal is sent from A to B. If B receives the new signal, it replies again, but if B does not receive the signal, then after a set time both A and B are reconfigured to the last known-good configuration and this is used for the transmission.

Various variations on this process are available. For example, from an analysis of the successfully transmitted signal, and knowledge of the environmental transfer functions describing the attenuation due to various environmental conditions, an estimation of the current environmental conditions can be ascertained, and then this transfer function is used to select the most appropriate VSLM configuration, i.e. the configuration most resilient to those particular environmental conditions.

Also various optimizations are possible in the selection of the next configuration to be used, allowing the system to arrive at the optimized configuration in fewer steps.

As well as direct communication between sender and receiver various reflective objects can also be used. These objects may be intentionally placed, but may be objects in the vicinity that are used for another purpose but have reflective properties that make them suitable for use as a relay between the sender and the receiver. Hence, the passage of light does not need to be directly from the sender to the receiver but may use a reflected object as a proxy unit in the VSLM. Thus, a transmission unit can be used even if it does not have a line of sight connection with the receiver. In this case the choice of whether to use a reflected object is based on whether this would help to optimize the transmission, and also the availability of the reflecting objects.

### Brief description of the drawings

- FIG. 1: is an example scenario of a data transmission between two Transmission Receiver Systems;
- FIG. 2: is an overview of an exemplary system according to an embodiment of the invention;
- FIG. 3: is a flow chart according to a method of an embodiment of the invention;
- FIG. 4: is a summary of the method used by the Configuration Optimization Algorithm, in accordance with an embodiment of the invention;
- FIG. 5: is a flow chart of the method according to a second embodiment of the invention; and
- FIG. 6: is the flow chart of the method according to a third embodiment of the invention.

### Detailed description of the invention

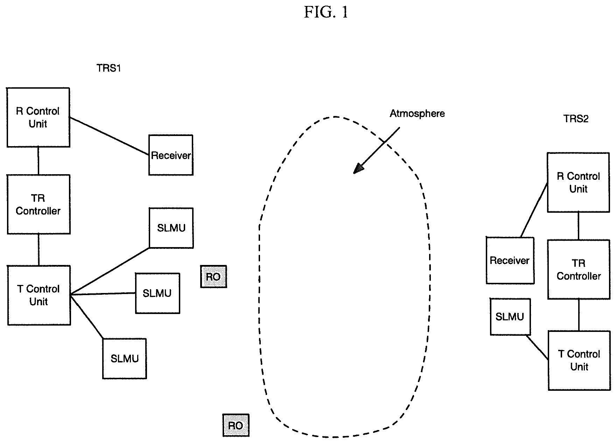

All the embodiments of the invention consider the scenario where data, the message, is sent from one Transmission Receiver System TRS1 to a second Transmission Receiver System TRS2. An example of such a scenario is given in FIG. 1.

FIG. 1 shows a first Transmission Receiver System TRS1 and a second Transmission Receiver System TRS2. Each of the systems is comprised by a receiver, a receiving control unit R Control Unit, a transmission receiver controller TR Controller, a transmission control unit T Control Unit, and a plurality of spatial light modulator units. The two systems are separated one from each other by an atmosphere, where some reflective objects (RO) may be present.

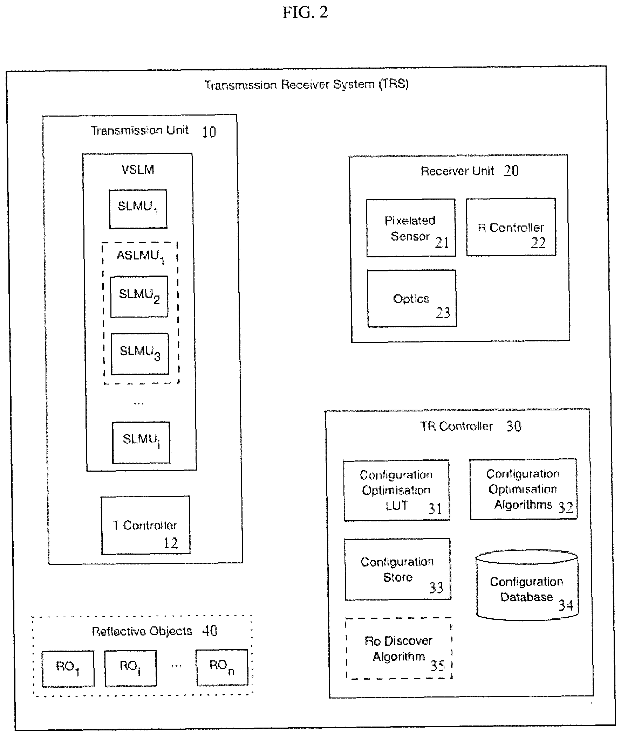

Hereunder, a first embodiment will be described in detail with reference to FIG. 2. In the first embodiment, a basic algorithm is used to optimize the sending and receiving configurations.

A visible light communication, VLC, network according to the first embodiment comprises at least two transmission receiver systems TRS1/TRS2. Each TRS is formed by a transmission unit 10; a receiver unit 20; and a transmission receiver, TR, controller 30.

The transmission unit 10 is configured to transmit data in a form of visible light. The transmission unit comprises multiple light emitters and a transmission controlling unit, T controller 12.

In this embodiment, the light emitters are a plurality of Spatial Light Modulator Units, SLMUs. Groups of SMLUs are formed in order to create a Virtual Spatial Light Modulator, VSLM, where a group of SLMUs can be aggregated to form an Aggregated Spatial Light Modulator Unit, ASLMU, and then the VSLM consists of a plurality of SLMUs and/or ASLMUs.

The T controller 12 is able to apply a configuration to the SLMUs in order to form a VSLM. The T controller 12 also stores some default messaging used in communication, for example a first test message (Test Data-A) used to open a new communication and a return second message (Test Data-B) used as a reply to confirm that the first message (Test Data-A) has been received.

The receiver unit 20 is configured to receive data in the form of visible light, wherein the receiver unit 20 comprises a pixelated sensor 21, a receiver controller, R controller 22, and an optical system 23 formed in front of the pixelated sensor 21.

The optical system 23 is formed in front of the pixelated sensor 21 in order to focus light onto the sensor 21. In some embodiments the optics 23 are controllable, adaptive optics, with their configuration being applied by the R controller 22. The adaptive optics of the optical system may also be used to choose between light paths. This may be realized by one or more spatial light modulators, mirrors, or just rotational stages by which also tilts are feasible.

The pixelated sensor 21 is able to spatially resolve incident light. In some other embodiments the pixelated sensor may include configurations where multiple pixels are joined in order to form an "Aggregated Pixel". An example of a pixelated sensor would be a CCD image sensor. Also in some embodiments, the pixelated sensor may be comprised of multiple individual sensors in different locations.

The receiver controller, R controller, 22 is configured to apply a configuration to the pixelated sensor 21.

The transmission receiver controller, TR controller, 30 is configured to: communicate with both the T controller 12 and the R controller 22; select a transmission optimization algorithm from a transmission optimization look-up table 31, LUT, wherein the LUT 31 is configured to associate various environmental conditions with VSLM and pixelated sensor configurations, wherein the associated configuration is likely to give the best signal-to-noise ratio for that given environmental condition; execute algorithms used to determine the optimal configuration of the TRS by use of at least one configuration optimization algorithm 32; store a set of these algorithms in a configuration optimization algorithm database 34; and store the configurations in a configuration memory 33.

Some examples of these configurations stored in the configuration memory might be the following: a configuration set to deliver the maximum signal-to-noise ratio possible with current resources, called primary configuration, i.e. the configuration of VSLM and pixelated sensor able to achieve the maximum signal on the pixelated sensor; the current configuration being used by the TRS, and the last known good, LKG, configuration to be successfully used to transmit data.

Each TRS may comprise, shown in dashed lines, at least one reflective object 40, RO, located such that they can reflect transmitted data, light, such that it can be received by the receiving TRS. In other words, the RO is configured to reflect the signal so that the transmitted data can be received by the receiving TRS, wherein the at least one RO can be either part of the original environment or intentionally placed in order to improve the transmission. In this regard, the TR controller is preferably able to store and execute an RO discovery algorithm 35 (also shown in dashed lines) able to determine the availability and usefulness of reflective objects, ROs.

Additionally, each TRS may further comprise a set of data transmission curves (not shown in FIG. 2) describing some influencing environmental effects such as e.g. attenuation, dispersion, scattering or refraction of light with known properties as it passes through various environmental conditions.

### First embodiment

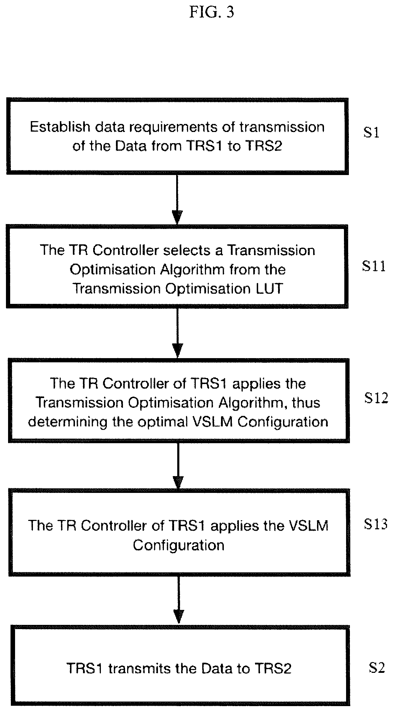

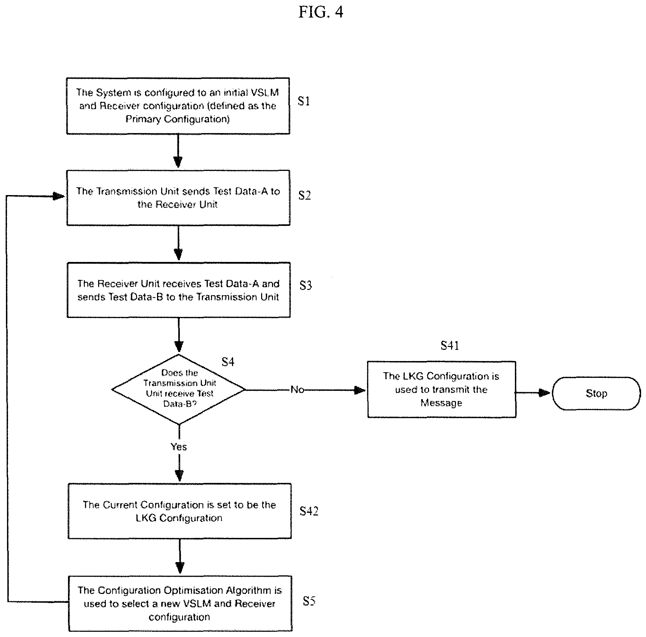

Hereunder, a method according to the first embodiment will be described in detail with reference to FIG. 3 and 4.

A method for a visible light communication, VLC, network comprising at least two transmission receiver systems (TRS1, TRS2), TRS. Each TRS is formed by a transmission unit comprising a plurality of spatial light modulator units, SLMUs. The plurality of SLMUs are configured to form groups in order to create a virtual spatial light modulator, VSLM, and a transmission controller, T controller, a receiver unit comprising a pixelated sensor, a receiver controller, R controller, and an optical system, a transmission receiver controller, TR controller, that communicates with both the T controller and the R controller, selects a transmission optimization algorithm from a transmission optimization look-up table (31), LUT, wherein the LUT (31) associates various environmental conditions with VSLM and pixilated sensor configurations, determines a configuration of the TRS by use of at least one configuration optimization algorithm, stores a set of these algorithms in a configuration optimization algorithm database, and stores the configurations in a configuration store. These configurations can be the configuration set to deliver the maximum signal-to-noise ratio possible with current resources, further referred to as primary configuration, the current configuration being used by the TRS, and the last known good, LKG, configuration to be successfully used to transmit data, the method comprising various steps as follows.

First of all the data requirements for transmission of data from TRS1 to TRS2 are established (Step S1). In this step, both TRS1 and TRS2 are configured to the primary configuration. To do that the TR controller of TRS 1 is configured to select a transmission optimization algorithm (Step S11) from a transmission optimization look-up table 31, LUT, wherein the LUT 31 is configured to associate various environmental conditions with VSLM and pixelated sensor configurations, wherein the associated configuration is likely to give the best signal to noise ratio for that given environmental condition.

Then, the TR controller of TRS1 applies said transmission optimization algorithm, thus determining the optimal VSLM configuration (Step S12).

Afterwards, the TR controller of TRS1 is configured to apply the VSLM configuration (Step S13).

The transmission unit of TRS1 sends a first test message (Test Data-A) to the receiver unit of TRS2 (Step S2).

The receiver unit of TRS2 receives the first test message (Test Data-A) and sends a second message (Test Data-B) via the transmission unit of TRS2 (Step S3).

The TR controller is then set to wait up to a prescribed time duration to see if any reply (Test Data-B) is returned (Step S4). If no reply is forthcoming (Step S41), the system is not able to send the message and proceeds to set TRS with the LKG configuration and transmitting a message from TRS1. On the other hand, if the receiver in TRS1 does receive the second test message (Test Data-B) from TRS2 (Step S42), then the TRS1 sets the primary configuration to be the LKG configuration.

Then, the configuration optimization algorithm selects a new configuration (Step S5). This selection can be based on any number of optimization strategies, for example the various configurations can be ordered by the data rate they offer, with each increase in data rate having an associated reduction in signal strength of the individual channels - and these configurations can be taken in turn. This new configuration is set to be the current configuration.

Afterwards, TRS1 resends the first test data (Test Data-A) using the current configuration, repeating the steps S1 to S4 until the second test data (Test Data-B) is not received within the prescribed time duration.

When this occurs TRS1 is set with the LKG configuration and transmits a message from TRS 1 (Step S41).

The transmission receiver controller, TR controller, 30 is configured to: select a transmission optimization algorithm from a transmission optimization look-up table 31, LUT, wherein the LUT 31 is configured to associate various environmental conditions with VSLM and pixelated sensor configurations, wherein the associated configuration is likely to give the best signal-to-noise ratio for that given environmental condition; execute algorithms used to determine the optimal configuration of the TRS by use of at least one configuration optimization algorithm 32; store a set of these algorithms in a configuration optimization algorithm database 34; and store the configurations in a configuration memory 33.

### Second Embodiment

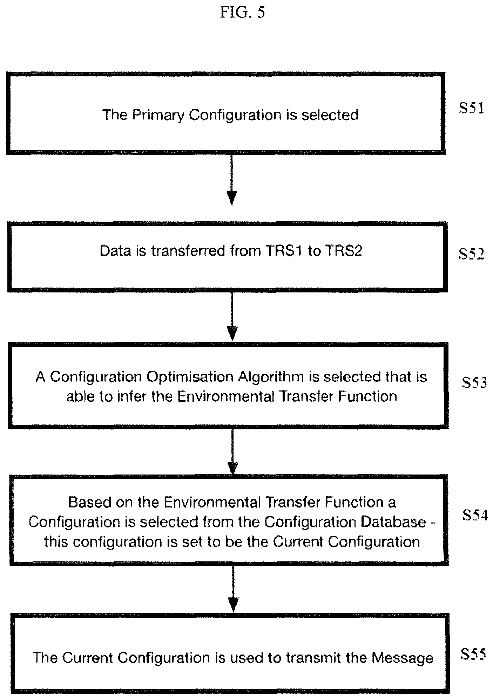

Hereunder, a second embodiment method will be described in detail with reference to FIG. 5.

The second embodiment follows embodiment 1. However, when the configuration optimization algorithm selects a new configuration (Step S5 of FIG. 3) this is done based on an analysis of the environmental effect on the transmission. An example of how this analysis occurs is given as follows.

The features and explanations given by the method described in embodiment 1 are hereunder obviated. Only the new and different aspects over the first embodiment will be described.

In the system of the second embodiment, each of the TRS further comprises a set of transmission curves data (not shown). The transmission curves describe influencing environmental effects, environmental transfer functions, such as attenuation, dispersion, scattering or refraction of light with known properties as it passes through various environmental conditions.

First, the TRS1 selects the primary configuration (Step S51), which uses a known set of SLMUs, with each SLMU having a characterized set of properties such as frequency, intensity etc.

Thus, TRS1 sends a first test data (Test Data-A) with a known set of properties (S52). Potentially, the first test data (Test Data-A) is sent multiple times with various properties, for example at different frequencies. TRS2 receives the first test data (Test Data-A) from TRS1 and compares the properties of the received light with the light sent by TRS1, and determines the transmission characteristics of the signal.

Then, the system compares the transmission characteristics with the transmission curves in order to find the transmission curve that best describes the current transmission characteristics and, according to that best transmission curve, a configuration optimization algorithm, that is able to infer the environmental transfer function, is selected (Step S53).

Based on the environmental transfer function, a configuration is selected from the configuration database - this configuration is set to be the current configuration (Step S54). In other words, said transmission curves are used as an input to query the transmission LUT and to find the most appropriate configuration for the transmission, and said configuration is set as the current configuration (Step S54).

Lastly, the current configuration is used to transmit the message (Step S55).

### Third embodiment

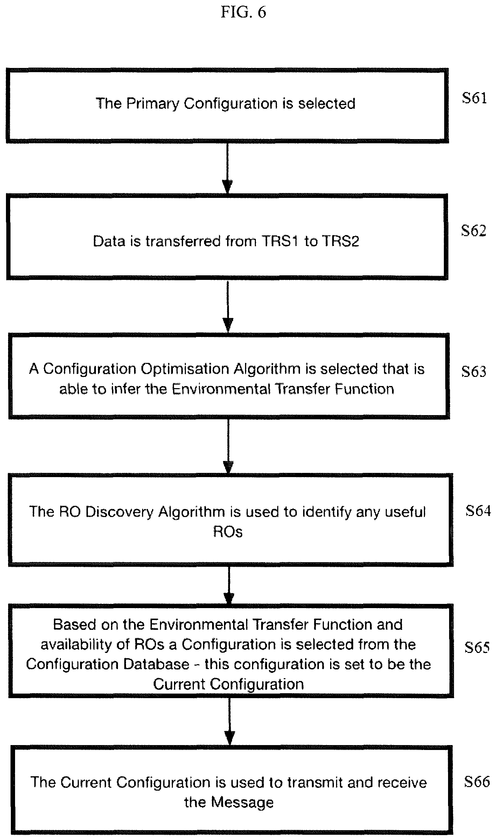

Hereunder, the third embodiment method will be described in detail with reference to FIG. 6.

The third embodiment follows either the first embodiment or the second embodiment. However, adds a capability to determine whether the transmission characteristics can be improved by incorporating ROs into the VSLM. An example of how this analysis, which is performed by the RO discovery algorithm, occurs is as follows.

TRS1 and TRS2 are set with the primary configuration (Step S61). However, in this occasion the primary configuration may also include SLMUs that do not have a line of sight transmission to TRS2.

TRS1 transmits a sequence of modulated test signals using this configuration to TRS2 (Step S62). Upon receiving said sequence in TRS2, the SLMUs with no line of sight transmission to the receiver unit are removed from the VSLM.

Then, the signal is then compared to the signal when all SLMUs were included in the VSLM. According to that comparison, a configuration optimization algorithm, that is able to infer the environmental transfer function, is selected (Step S63).

If the comparison shows that the signal has been degraded, it is determined that the transmission has been lost due to a reflective object, RO. Otherwise, if the signal is improved, the SLMU is added to the VSLM. This is done by the RO discovery algorithm, which is used to identify any useful ROs (Step S64).

Based on the environmental transfer function and the availability of ROs, a configuration is selected from the configuration database - this configuration is set to be the current configuration (Step S65).

Lastly, the current configuration is used to transmit and receive the message (Step S66).

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A visible light communication, VLC, network comprising:
at least two transmission receiver systems (TRS1, TRS2), TRS, wherein each TRS is formed by:
a transmission unit (10) configured to transmit data in a form of visible light, wherein the transmission unit comprises a plurality of spatial light modulator units, SLMUs, wherein the plurality of SLMUs are configured to form groups in order to create a virtual spatial light modulator, VSLM, and a transmission controller (12), T controller;
a receiver unit (20) configured to receive data in the form of visible light, wherein the receiver unit comprises a pixelated sensor (21), a receiver controller (22), R controller, and an optical system (23) formed in front of the pixelated sensor (21);
a transmission receiver controller (30), TR controller, configured to
communicate with both the T controller (12) and the R controller (22),
select a transmission optimization algorithm from a transmission optimization look-up table (31), LUT, wherein the LUT (31) is configured to associate various environmental conditions with VSLM and pixilated sensor configurations,
determine a configuration of the TRS by use of at least one configuration optimization algorithm (32),
store a set of these algorithms in a configuration optimization algorithm database (34), and
store the configurations in a configuration memory (33), wherein these configurations can be the configuration set to deliver the maximum signal-to-noise ratio possible with current resources, called primary configuration, the current configuration being used by the TRS, and the last configuration to be successfully used to transmit data.

2. The VLC network of claim 1, where a group of SLMUs can be aggregated to form an aggregated spatial light modulator unit, ASLMU, and wherein the T controller (12) is configured to apply a configuration to the SLMUs in order to form the VSLM and to store a default messaging used in communication.

3. The VLC network of claim 1 or 2, wherein the pixelated sensor (21) is configured to spatially resolve the incident light and wherein the R controller (22) is configured to apply a configuration to the pixelated sensor (21).

4. The VLC network of any of claims 1 to 3, wherein the optical system (23) is configured to be controlled by the R controller (22), adaptive optical system.

5. The VLC network of claim 4, wherein the adaptive optical system (23) is configured to be used to choose between light paths by at least one or more spatial light modulators, mirrors, or rotational stages by which also tilts are feasible.

6. The VLC network of any of claims 1 to 5, wherein each of the TRS further comprises:
at least one reflective object (40), RO, configured to reflect the signal so that the transmitted data can be received by the receiving TRS, wherein the at least one RO (40) can be either part of the original environment or intentionally placed in order to improve the transmission.

7. The VLC network of claim 6, wherein the TR controller is further configured to store and to execute an algorithm (35) capable to determine the availability and usefulness of reflective objects, ROs.

8. The VLC network of any of claims 1 to 7, wherein each of the TRS further comprises:
a set of transmission curves data, wherein these transmission curves describe influencing environmental effects such as attenuation, dispersion, scattering or refraction of light with known properties as it passes through various environmental conditions.

9. A method for a visible light communication, VLC, network comprising at least two transmission receiver systems (TRS1, TRS2), TRS, wherein each TRS is formed by
a transmission unit (10) comprising a plurality of spatial light modulator units, SLMUs, wherein the plurality of SLMUs are configured to form groups in order to create a virtual spatial light modulator, VSLM, and a transmission controller (12), T controller,
a receiver unit (20) comprising a pixelated sensor (21), a receiver controller (22), R controller, and an optical system (23),
a transmission receiver controller (30), TR controller, that communicates with both the T controller (12) and the R controller (22), selects a transmission optimization algorithm from a transmission optimization look-up table (31), LUT, wherein the LUT
(31) associates various environmental conditions with VSLM and pixilated sensor configurations, determines a configuration of the TRS by use of at least one configuration optimization algorithm (32), stores a set of these algorithms in a configuration optimization algorithm database (34), and stores the configurations in a configuration store (33), wherein these configurations can be the configuration set to deliver the maximum signal to noise possible with current resources, further referred to as primary configuration, the current configuration being used by the TRS, and the last known good, LKG, configuration to be successfully used to transmit data, the method comprising the steps of
a) establishing data requirements for transmitting data from TRS1 to TRS2 (Step S1);
b) selecting a transmission optimization algorithm (Step S11) from a transmission optimization look-up table, LUT, (31);
c) determining the optimal VSLM configuration according to the transmission optimization algorithm (Step S12);
d) applying the selected VSLM configuration (Step S13);
e) transmitting first test data (Test Data-A) from the transmission unit (10) TRS1 to the receiver unit (20) of TRS2, both configured primary (Step S2);
f) receiving the first test message (Test Data-A) at the receiver unit (20) of TRS2 and sending a second test data (Test Data-B) via the transmission unit (10) of TRS2 (Step S3);
g) waiting up at the TR controller (30) to a prescribed time duration to see if a reply is received from TRS2 (Step S4),
wherein in the case that no answer is received after the prescribed time duration, the TRS1 is not able to send a message and the method proceeds with step j) (Step S41),
wherein in the case that the receiver unit (20) of TRS1 receives the second test data from TRS2, setting the primary configuration in TRS1 to be the LKG configuration (Step S42),
h) using the configuration optimization algorithm (32) to select and set the current configuration based on an optimization strategy (Step S5),
i) repeating steps e) to g) until the second test data is not received within the prescribed time duration, and
j) when this occurs setting the TRS1 with the LKG configuration, and transmitting a message from TRS1 (Step S41).

10. The method of claim 9, wherein each TRS further comprising, a set of transmission curves data, wherein the transmission curves describe influencing environmental effects such as attenuation, dispersion, scattering or refraction of light with known properties as it passes through various environmental conditions, the method further comprising the steps of
selecting a new configuration using the configuration optimization algorithm (32) based on an analysis of the environmental effect on the transmission (Step S51);
transmitting first test data with a known set of properties (Step S52) multiple times with various properties, such as different frequencies, from the transmission unit (10) of TRS1 to the receiver unit (20) of TRS2 and receiving the first test data at TRS2, comparing the properties of the received light with the light sent by TRS1, and determining the transmission characteristics of the signal;
comparing the transmission characteristics with the transmission curves and finding the best transmission curve that best describes the current transmission characteristics (Step S53);
using said transmission curve as an input to query the transmission LUT (31) and finding the most appropriate configuration for the transmission (Step S54);
setting said configuration as the current configuration (Step S55).

11. The method of any of claims 9 or 10, further comprising the step of determining, via a RO discovery algorithm (35) further comprised in the TR controller (30), whether the transmission characteristics can be improved by incorporating at least one reflective object (40), RO, into the VSLM.

12. The method of claim 11, wherein the step of determining whether the transmission characteristics can be improved by incorporating at least one RO (40) into the VSLM comprises the steps of
setting TRS1 and TRS2 with the primary configuration (Step S61), wherein the primary configuration can include SLMUs that do not have a line of sight transmission to TRS2;
transmitting from TRS1 to TRS2 a sequence of modulated test signals using this configuration and receiving said sequence by TRS2 and removing from the VSLM the SLMUs with no line of sight transmission to the receiver unit (Step S62);
running the RO discovery algorithm (35), identifying the useful ROs by comparing the sequence of modulated signals to the sequence of modulated signals when all SLMUs were included in the VSLM and selecting a configuration optimization algorithm (32), according to that comparison (Step S63);
if the signal is degraded, determining that the transmission has been lost due to a RO, if the signal is improved, adding the SLMU to the VSLM .

## Patentansprüche

1. Netzwerk zur Kommunikation mit sichtbarem Licht, VLC, das aufweist:
mindestens zwei Sende-Empfänger-Systeme (TRS1, TRS2), TRS, wobei jedes TRS gebildet wird durch:
eine Sendeeinheit (10), die konfiguriert ist, Daten in Form von sichtbarem Licht zu senden, wobei die Sendeeinheit mehrere räumliche Lichtmodulatoreinheiten, SLMUs, wobei die mehreren SLMUs konfiguriert sind, Gruppen zu bilden, um einen virtuellen räumlichen Lichtmodulator, VSLM, zu erzeugen, und einen Sendecontroller (12), T-Controller, aufweist;
eine Empfängereinheit (20), die konfiguriert ist, Daten in der Form von sichtbarem Licht zu empfangen, wobei die Empfängereinheit einen pixelierten Sensor (21), einen Empfängercontroller (22), R-Controller, und ein optisches System (23) aufweist, das vor dem pixelierten Sensor (21) ausgebildet ist;
einen Sende-Empfänger-Controller (30), TR-Controller, der konfiguriert ist:
sowohl mit dem T-Controller (12) als auch den R-Controller (22) zu kommunizieren, einen Sendeoptimierungsalgorithmus aus einer Sendeoptimierungs-Nachschlagtabelle (31), LUT, auszuwählen, wobei die LUT (31) konfiguriert ist, verschiedene Umgebungsbedingungen mit einem VSLM und Konfigurationen von pixelierten Sensoren zu verknüpfen,
eine Konfiguration des TRS durch Verwendung von mindestens einem Algorithmus (32) zur Konfigurationsoptimierung zu bestimmen,
einen Satz dieser Algorithmen in eine Datenbank (34) für Algorithmen zur Konfigurationsoptimierung zu speichern, und
die Konfigurationen in einem Konfigurationsspeicher (33) zu speichern, wobei diese Konfigurationen die Konfiguration, die eingestellt wird, um das mit den gegenwärtigen Ressourcen mögliche maximale Signal-Rausch-Verhältnis zu liefern, primäre Konfiguration genannt, die gegenwärtige Konfiguration, die durch das TRS verwendet wird, und die letzte Konfiguration sein kann, um erfolgreich verwendet zu werden, Daten zu senden.

2. VLC-Netzwerk nach Anspruch 1, wobei eine Gruppe von SLMUs vereinigt werden kann, um eine vereinigte räumliche Lichtmodulatoreinheit, ASLMU, zu bilden, und wobei der T-Controller (12) konfiguriert ist, eine Konfiguration auf die SLMUs anzuwenden, um den VSLM zu bilden und einen Vorgabenachrichtenversand zu speichern, der in der Kommunikation verwendet wird.

3. VLC-Netzwerk nach Anspruch 1 oder 2, wobei der pixelierte Sensor (21) konfiguriert ist, das einfallende Licht räumlich aufzulösen, und wobei der R-Controller (22) konfiguriert ist, eine Konfiguration auf den pixelierten Sensor (21) anzuwenden.

4. VLC-Netzwerk nach einem der Ansprüche 1 bis 3, wobei das optische System (23) konfiguriert ist, durch den R-Controller (22) gesteuert zu werden, adaptives optisches System.

5. VLC-Netzwerk nach Anspruch 4, wobei das adaptive optische System (23) konfiguriert ist, verwendet zu werden, um zwischen Lichtwegen durch mindestens einen oder mehreren räumlichen Lichtmodulatoren, Spiegeln oder drehbaren Stufen zu wählen, durch die auch Neigungen machbar sind.

6. VLC-Netzwerk nach einem der Ansprüche 1 bis 5, wobei jedes TRS ferner aufweist:
mindestens ein reflektierendes Objekt (40), RO, das konfiguriert ist, das Signal zu reflektieren, so dass die gesendeten Daten durch das empfangende TRS empfangen werden können, wobei das mindestens eine RO (40) entweder Teil der ursprünglichen Umgebung sein kann oder absichtlich angeordnet werden kann, um die Übertragung zu verbessern.

7. VLC-Netzwerk nach Anspruch 6, wobei der TR-Controller ferner konfiguriert ist, einen Algorithmus (35) zu speichern und auszuführen, der imstande ist, die Verfügbarkeit und Nützlichkeit von reflektierenden Objekten, ROs, zu bestimmen.

8. VLC-Netzwerk nach einem der Ansprüche 1 bis 7, wobei jedes TRS ferner aufweist:
einen Satz von Übertragungskurvendaten, wobei diese Übertragungskurven beeinflussende Umgebungseffekte, wie Dämpfung, Dispersion, Streuung oder Brechung von Licht mit bekannten Eigenschaften beschreiben, wenn es durch verschiedene Umgebungsbedingungen geht.

9. Verfahren für ein Netzwerk zur Kommunikation mit sichtbarem Licht, VLC, das mindestens zwei Sende-Empfänger-Systeme (TRS1, TRS2), TRS, aufweist, wobei jedes TRS gebildet wird durch:
eine Sendeeinheit (10), die mehrere räumliche Lichtmodulatoreinheiten, SLMUs, wobei die mehreren SLMUs konfiguriert sind, Gruppen zu bilden, um einen virtuellen räumlichen Lichtmodulator, VSLM, zu erzeugen, und einen Sendecontroller (12), T-Controller aufweist,
eine Empfängereinheit (20), die einen pixelierten Sensor (21), einen Empfängercontroller (22), R-Controller, und ein optisches System (23) aufweist,
einen Sende-Empfänger-Controller (30), TR-Controller, der sowohl mit dem T-Controller (12) als auch mit dem R-Controller (22) kommuniziert, einen Sendeoptimierungsalgorithmus aus einer Sendeoptimierungs-Nachschlagtabelle (31), LUT, auswählt, wobei die LUT (31) verschiedene Umgebungsbedingungen mit einem VSLM und Konfigurationen von pixelierten Sensoren verknüpft, eine Konfiguration des TRS durch die Verwendung von mindestens einem Algorithmus (32) zur Konfigurationsoptimierung bestimmt, einen Satz dieser Algorithmen in einer Datenbank (34) für Algorithmen zur Konfigurationsoptimierung speichert, und die Konfigurationen in einem Konfigurationsspeicher (33) speichert, wobei diese Konfigurationen die Konfiguration, die eingestellt wird, um das mit den gegenwärtigen Ressourcen mögliche maximale Signal-Rausch-Verhältnis zu liefern, ferner als primäre Konfiguration bezeichnet, die gegenwärtige Konfiguration, die durch das TRS verwendet wird, und die letzte bekannte gute, LKG, Konfiguration sein kann, um erfolgreich verwendet zu werden, Daten zu senden, wobei das Verfahren die Schritte aufweist:
a) Erstellen von Datenanforderungen zum Senden von Daten vom TRS1 zum TRS2 (Schritt S1);
b) Auswählen eines Sendeoptimierungsalgorithmus (Schritt S11) aus einer Sendeoptimierungs-Nachschlagtabelle, LUT, (31);
c) Bestimmen der optimalen VSLM-Konfiguration gemäß dem Sendeoptimierungsalgorithmus (Schritt S12);
d) Anwenden der ausgewählten VSLM-Konfiguration (Schritt S13);
e) Senden von ersten Testdaten (Test Data-A) von der Sendeeinheit (10) TRS1 zur Empfängereinheit (20) des TRS2, die beide primär konfiguriert sind (Schritt S2);
f) Empfangen der ersten Testnachricht (Test Data-A) an der Empfängereinheit (20) des TRS2 und Senden von zweiten Testdaten (Test Data-B) über die Sendeeinheit (10) des TRS2 (Schritt S3);
g) Warten am TR-Controller (30) eine vorgeschriebene Zeitdauer, um festzustellen, ob eine Antwort vom TRS2 empfangen wird (Schritt S4),
wobei im Fall, dass keine Antwort nach der vorgeschriebenen Zeitdauer empfangen wird, das TRS1 nicht imstande ist, eine Nachricht zu senden, und das Verfahren mit Schritt j) fortfährt (Schritt S41),
wobei im Fall, dass die Empfängereinheit (20) des TRS1 die zweiten Testdaten vom TRS2 empfängt, Einstellen der primären Konfiguration im TRS1 als die LKG-Konfiguration (Schritt S42),
h) Nutzen des Algorithmus zur Konfigurationsoptimierung (32), um die gegenwärtige Konfiguration beruhend auf einer Optimierungsstrategie (Schritt S5) auszuwählen und einzustellen,
i) Wiederholen der Schritte e) bis g), bis die zweiten Testdaten nicht in der vorgeschriebenen Zeitdauer empfangen werden, und
j) wenn dies auftritt, Einstellen des TRS1 mit der LKG-Konfiguration, und Senden einer Nachricht vom TRS1 (Schritt S41).

10. Verfahren nach Anspruch 9, wobei jedes TRS ferner einen Satz von Übertragungskurvendaten aufweist, wobei diese Übertragungskurven beeinflussende Umgebungseffekte, wie Dämpfung, Dispersion, Streuung oder Brechung von Licht mit bekannten Eigenschaften beschreiben, wenn es durch verschiedene Umgebungsbedingungen geht, wobei das Verfahren ferner die Schritte aufweist:
Auswählen einer neuen Konfiguration unter Verwendung des Algorithmus (32) zur Konfigurationsoptimierung beruhend auf einer Analyse des Umgebungseffekts auf die Übertragung (Schritt S51);
Senden von ersten Testdaten mit einem bekannten Satz von Eigenschaften (Schritt S52) mehrere Male mit verschiedenen Eigenschaften, wie unterschiedliche Frequenzen, von der Sendeeinheit (10) des TRS1 an die Empfängereinheit (20) des TRS2 und Empfangen der ersten Testdaten am TRS2, Vergleichen der Eigenschaften des empfangenen Lichts mit dem durch das TRS1 gesendeten Licht, und Bestimmen der Übertragungseigenschaften des Signals;
Vergleichen der Übertragungseigenschaften mit den Übertragungskurven und Finden der besten Übertragungskurve, die die gegenwärtigen Übertragungseigenschaften am besten beschreibt (Schritt S53);
Verwenden der Übertragungskurve als Eingabe, um die Übertragungs-LUT (31) abzufragen und Finden der am besten geeigneten Konfiguration für die Übertragung (Schritt S54);
Einstellen der Konfiguration als die gegenwärtige Konfiguration (Schritt S55).

11. Verfahren nach einem der Ansprüche 9 oder 10, das ferner den Schritt des Feststellens über einen RO-Entdeckungsalgorithmus (35) aufweist, der ferner im TR-Controller (30) enthalten ist, ob die Übertragungseigenschaften durch Einbauen von mindestens einem reflektierenden Objekt (40), RO, in den VSLM verbessert werden können.

12. Verfahren nach Anspruch 11, wobei der Schritt des Feststellens, ob die Übertragungseigenschaften durch Einbauen von mindestens einem RO (40) in den VSLM verbessert werden können, die Schritte aufweist:
Einstellen des TRS1 und TRS2 mit der primären Konfiguration (Schritt S61), wobei die primäre Konfiguration SLMUs aufweisen kann, die keine Sichtlinienübertragung zum TRS2 aufweisen;
Senden vom TRS1 zum TRS2 eine Abfolge von modulierten Testsignalen unter Verwendung von dieser Konfiguration und Empfangen der Abfolge durch das TRS2 und Entfernen aus dem VSLM der SLMUs ohne eine Sichtlinienübertragung zur Empfängereinheit (Schritt S62);
Ausführen des RO-Entdeckungsalgorithmus (35), wobei die nützlichen ROs durch Vergleichen der Abfolge der modulierten Signale mit der Abfolge der modulierten Signale erkannt werden, wenn alle SLMUs im VSLM enthalten waren, und Auswählen eines Algorithmus zur Konfigurationsoptimierung (32) gemäß diesem Vergleich (Schritt S63);
wenn das Signal verschlechtert wird, Feststellen, dass eine Übertragung infolge eines RO verloren gegangen ist,
wenn das Signal verbessert wird, Hinzufügen der SLMU zum VSLM.

## Revendications

1. Réseau de communication de lumière visible, VLC, comprenant :
au moins deux systèmes récepteurs de transmission (TRS1, TRS2), TRS, chaque TRS étant formé par :
une unité de transmission (10) prévue pour transmettre des données sous forme de lumière visible, ladite unité de transmission comprenant une pluralité d'unités de modulateur de lumière spatial, SLMU, ladite pluralité de SLMU étant prévue pour former des groupes afin de créer un modulateur de lumière spatial virtuel, VSLM, et un contrôleur de transmission (12), contrôleur T ;
une unité de réception (20) prévue pour recevoir des données sous forme de lumière visible, ladite unité de réception comprenant un capteur pixelisé (21), un contrôleur de réception (22), contrôleur R, et un système optique (23) formé en avant du capteur pixelisé (21) ;
un contrôleur de récepteur de transmission (30), contrôleur TR, prévu pour communiquer avec le contrôleur T (12) et le contrôleur R (22),
sélectionner un algorithme d'optimisation de transmission dans une table de recherche d'optimisation de transmission (31), LUT, ladite LUT (31) étant prévue pour associer diverses conditions environnementales à des configurations de VSLM et de capteur pixelisé,
déterminer une configuration des TRS au moyen d'au moins un algorithme d'optimisation de configuration (32),
stocker un ensemble desdits algorithmes dans une base de données (34) d'algorithmes d'optimisation de configuration, et
stocker les configurations dans une mémoire de configurations (33), lesdites configurations pouvant être la configuration définie pour fournir le rapport signal-bruit maximal possible avec les ressources actuelles, qualifiée de configuration primaire, la configuration actuelle exploitée par les TRS, et la dernière configuration utilisée avec succès pour la transmission de données.

2. Réseau VLC selon la revendication 1, où un groupe de SLMU peut être agrégé pour former une unité de modulateurs de lumière agrégés, ASLMU, et où le contrôleur T (12) est prévu pour appliquer une configuration sur les SLMU afin de former le VSLM et stocker une messagerie par défaut default utilisée lors de la communication.

3. Réseau VLC selon la revendication 1 ou la revendication 2, où le capteur pixelisé (21) est prévu pour une résolution spatiale de la lumière incidente et où le contrôleur R (22) est prévu pour appliquer une configuration sur le capteur pixelisé (21).

4. Réseau VLC selon l'une des revendications 1 à 3, où le système optique (23) est prévu pour être commandé par le contrôleur R (22), système optique adaptatif.

5. Réseau VLC selon la revendication 4, où le système optique adaptatif (23) est prévu pour être utilisé pour une sélection entre trajets lumineux par un ou plusieurs modulateurs de lumière spatiaux, miroirs, ou platines rotatives permettant également des inclinaisons.

6. Réseau VLC selon l'une des revendications 1 à 5, où chaque TRS comprend en outre :
au moins un objet réfléchissant (40), RO, prévu pour réfléchir le signal de manière à permettre la réception des données transmises par le TRS récepteur, ledit au moins un RO (40) pouvant faire partie de l'environnement original ou être disposé intentionnellement afin d'améliorer la transmission.

7. Réseau VLC selon la revendication 6, où le contrôleur TR est en outre prévu pour stocker et mémoriser un algorithme (35) apte à déterminer la disponibilité et l'utilité des objets réfléchissants, RO.

8. Réseau VLC selon l'une des revendications 1 à 7, où chaque TRS comprend en outre :
un ensemble de données de courbes de transmission, lesdites courbes de transmission décrivant des effets environnementaux déterminants tels qu'atténuation, dispersion, diffusion ou réfraction de lumière avec des propriétés connues au passage par diverses conditions environnementales.

9. Procédé pour un réseau de communication de lumière visible, VLC, comprenant au moins deux systèmes récepteurs de transmission (TRS1, TRS2), TRS, où chaque TRS est formé par
une unité de transmission (10) comprenant une pluralité d'unités de modulateur de lumière spatial, SLMU, ladite pluralité de SLMU étant prévue pour former des groupes afin de créer un modulateur de lumière spatial virtuel, VSLM, et un contrôleur de transmission (12), contrôleur T,
une unité de réception (20) comprenant un capteur pixelisé (21), un contrôleur de réception (22), contrôleur R, et un système optique (23),
un contrôleur de récepteur de transmission (30), contrôleur TR, communiquant avec le contrôleur T (12) et le contrôleur R (22), sélectionnant un algorithme d'optimisation de transmission dans une table de recherche d'optimisation de transmission (31), LUT, ladite LUT (31) associant diverses conditions environnementales à des configurations de VSLM et de capteur pixelisé, déterminant une configuration des TRS au moyen d'au moins un algorithme d'optimisation de configuration (32), stockant un ensemble desdits algorithmes dans une base de données (34) d'algorithmes d'optimisation de configuration, et stockant les configurations dans une mémoire de configurations (33), lesdites configurations pouvant être la configuration définie pour fournir le rapport signal-bruit maximal possible avec les ressources actuelles, qualifiée de configuration primaire, la configuration actuelle exploitée par les TRS, et la dernière configuration satisfaisante LKG connue utilisée avec succès pour la transmission de données, ledit procédé comprenant les étapes suivantes :
a) établissement d'exigences de données pour la transmission de données du TRS1 au TRS2 (étape S1) ;
b) sélection d'un algorithme d'optimisation de transmission (étape S11) dans une table de recherche d'optimisation de transmission, LUT, (31) ;
c) détermination de la configuration de VSLM optimale en fonction de l'algorithme d'optimisation de transmission (étape S12) ;
d) application de la configuration de VSLM sélectionnée (étape S13) ;
e) transmission de premières données de test (données de test A) de l'unité de transmission (10) de TRS1 à l'unité de réception (20) de TRS2, les deux configurées de manière primaire (étape S2) ;
f) réception du premier message de test (données de test A) sur l'unité de réception (20) de TRS2 et émission de deuxièmes données de test (données de test B) via l'unité de transmission (10) de TRS2 (étape S3) ;
g) attente sur le contrôleur TR (30) pendant une durée prescrite dans l'expectative d'une réception de réponse de TRS2 (étape S4),
où, dans le cas où aucune réponse n'est reçue à l'expiration de la durée prescrite, le TRS1 n'est pas apte à émettre un message et le procédé passe à l'étape j) (étape S41), où, dans le cas où l'unité de réception (20) de TRS1 reçoit les deuxièmes données de test de TRS2, la configuration primaire en TRS1 est définie être la configuration LKG (étape S42),
h) recours à l'algorithme d'optimisation de configuration (32) pour sélectionner et définir la configuration actuelle sur la base d'une stratégie d'optimisation (étape S5),
i) répétition des étapes e) à g) jusqu'à ce que les deuxièmes données de test ne soient pas reçues pendant la durée prescrite, et,
j) si cela est le cas, définition du TRS1 avec la configuration LKG, et transmission d'un message de TRS1 (étape S41).

10. Procédé selon la revendication 9, où chaque TRS comprend en outre un ensemble de données de courbes de transmission, lesdites courbes de transmission décrivant des effets environnementaux déterminants tels qu'atténuation, dispersion, diffusion ou réfraction de lumière avec des propriétés connues au passage par diverses conditions environnementales, ledit procédé comprenant en outre les étapes suivantes :
sélection d'une nouvelle configuration au moyen de l'algorithme d'optimisation de configuration (32) sur la base d'une analyse des effets environnementaux sur la transmission (étape S51) ;
transmission à plusieurs reprises de premières données de test avec un ensemble de propriétés connu (étape S52) comprenant diverses propriétés, telles que fréquences différentes, de l'unité de transmission (10) de TRS1 à l'unité de réception (20) de TRS2 et
réception des premières données de test sur TRS2, comparaison des propriétés de la lumière reçue avec la lumière émise par TRS1, et détermination des caractéristiques de transmission du signal ;
comparaison des caractéristiques de transmission avec les courbes de transmission et recherche de la meilleure courbe de transmission décrivant de manière optimale les caractéristiques de transmission actuelle (étape S53) ;
recours à ladite courbe de transmission comme entrée pour interroger la LUT de transmission (31) et trouver la configuration la plus appropriée pour la transmission (étape S54) ;
définition de ladite configuration comme configuration actuelle (étape S55).

11. Procédé selon la revendication 9 ou la revendication 10, comprenant en outre l'étape de détermination, par un algorithme de découverte de RO (35) également compris dans le contrôleur TR (30), si les caractéristiques de transmission peuvent être améliorées en intégrant au moins un objet réfléchissant (40), RO, au VSLM.

12. Procédé selon la revendication 11, où l'étape de détermination si les caractéristiques de transmission peuvent être améliorées en intégrant au moins un RO (40) au VSLM comprend les étapes suivantes :
définition de TRS1 et TRS2 avec la configuration primaire (étape S61), ladite configuration primaire pouvant inclure des SLMU ne présentant aucune ligne de transmission visuelle vers TRS2 ;
transmission de TRS1 à TRS2 d'une séquence de signaux de test modulés au moyen de ladite configuration et réception de ladite séquence par TRS2, et retrait hors du VSLM des SLMU sans ligne de transmission vers l'unité de réception (étape S62) ;
lancement de l'algorithme de découverte de RO (35), identification des RO utiles par comparaison de la séquence des signaux modulés à la séquence des signaux modulés quand tous les SLMU étaient inclus dans le VSLM et sélection d'un algorithme d'optimisation de configuration (32) en fonction de ladite comparaison (étape S63) ;
si le signal est dégradé, détermination que la transmission a été manquée du fait d'un RO, si le signal est amélioré, ajout du SLMU au VSLM.
